# EUROPEAN PATENT SPECIFICATION

(11) **EP 4 590 470 B1**
(45) Date of publication and mention of the grant of the patent: **01.07.2026**
(21) Application number: 23785885.7
(22) Date of filing: 12.09.2023
(51) Int. Cl.: B25J 9/00, B25J 17/02

(54) **ROBOTIC MANIPULATION APPARATUS FOR OBJECTS**
ROBOTISCHE MANIPULATIONSVORRICHTUNG FÜR OBJEKTE
APPAREIL DE MANIPULATION ROBOTIQUE POUR OBJETS

(30) Priority: 19.09.2022 IT 202200019092
(43) Date of publication of application: 30.07.2025
(73) Proprietor: I.M.A. Industria Macchine Automatiche S.p.A, 40064 Ozzano dell'Emilia (BO) (IT)
(72) Inventor: SASSI, Fabio, 40064 OZZANO DELL'EMILIA (BO) (IT); POLI, Daniele, 40064 OZZANO DELL'EMILIA (BO) (IT)
(74) Representative: Petraz, Davide Luigi
(86) International application number: PCT/IT2023/050205
(87) International publication number: WO 2024/062507

(56) References cited:
- EP-A1- 2 283 983
- EP-A1- 2 740 563
- CN-A- 102 632 502
- JP-B2- 3 931 296
- US-B2- 8 839 690
- PIERROT F ET AL: "H4: a new family of 4-DOF parallel robots", IEEE/ASME INTERNATIONAL CONFERENCE ON ADVANCED INTELLIGENTMECHATRONICS. FINAL PROGRAM AND ABSTRACTS, XX, XX, 19 September 1999 (1999-09-19), pages 508 - 513, XP002167851

## Description

### FIELD OF THE INVENTION

The present invention concerns a robotic manipulation apparatus for objects of substantially small sizes, such as containers or packets suitable to contain a plurality of discrete articles such as foodstuff, for example candies, chewing gum, chocolates, cookies, or drugs, or more.

### BACKGROUND OF THE INVENTION

Robotic manipulation apparatuses parallel to several axes are known, such as "Delta" robots for example, which are usually disposed along processing lines to manipulate objects of substantially small sizes, as indicated above. These manipulation devices are particularly suitable for manipulating objects with reduced weights and overall sizes, and are capable of carrying out a very high number of displacements per unit of time, typically for rather small travels.

Generally, these robotic manipulation apparatuses are provided with a support structure with which three or more mobile arms are operatively associated, the same as each other and each connected to a terminal gripping member, also known by the term "end-effector", which can be conformed or shaped in various ways in relation to the type of use and/or the type of object to be manipulated.

Each mobile arm is provided with both a pendular part rotatably associated with the support structure and driven by means of a respective electric motor, and also a parallelogram-shaped part, connected to the pendular part and to the gripping member by means of ball joints, or possibly rotational joints or torques, suitably oriented with respect to each other.

Usually, these robotic apparatuses have three degrees of freedom, and the gripping member can move effectively while remaining parallel to the work plane; however, this results in the disadvantage that complex manipulations of the objects cannot be carried out, since the movement of the latter is constrained to the three degrees of freedom of the robotic devices themselves.

In the prior art, there are solutions that provide to move and incline the gripping member even not parallel to the work plane, thus presenting four degrees of freedom. Such solutions usually provide to use an additional motor which is attached to the frame of the manipulation apparatus and a kinematic chain operatively connected to the motor which, for example, consists of a prismatic torque and a mechanism defined by gears or linkages, and which transforms the rotational motion of the motor itself into a rotational motion on the gripping member.

By way of example, a central telescopic arm may be employed which is driven by said additional motor and which is capable of axially extending in a selective manner in order to incline the gripping member while the other arms are moved in a coordinated manner.

Document CN102632502 A discloses a manipulator member with six degrees of freedom comprising a fixed frame, a mobile platform, a manipulator wrist with three degrees of freedom and six mobile branched chains which are disposed between the fixed frame and the mobile platform.

Document EP2740563 A1 discloses a processing device comprising a base body and a machining head which are connected to each other by means of three connection devices, which are respectively connected by means of first connections parallel to the base body, so that it is orientable around a first axis of rotation, and second connections parallel to the machining head, so that it is orientable around a second axis of rotation, parallel to the first axis of rotation.

In addition, solutions are also known that provide that the additional motor is positioned directly on the gripping member; however, this involves increasing the moving masses together with the gripping member.

These solutions have the disadvantages of increasing the overall inertia of the moving masses and making the movement of the gripping member more complicated and its positioning imprecise, as well as affecting the dynamics of the entire apparatus by introducing play between the mechanical components thereof.

Another disadvantage of these solutions is that they are substantially complex. Furthermore, since the telescopic arm and/or the gearbox, or linkages, are disposed centrally between the other mobile arms, they are difficult to access for any maintenance.

Another disadvantage of this solution is linked to the fact that parallel robotic manipulation apparatuses are often used in decontaminated environments and the lubrication of the telescopic arm and/or gears can compromise the hygiene and cleanliness of the surrounding environment, risking contaminating the objects to be manipulated.

There is therefore the need to perfect a robotic manipulation apparatus for manipulating objects that can overcome at least one of the disadvantages of the state of the art.

To do this, it is necessary to solve the technical problem of creating a robotic manipulation apparatus that allows to move the gripping member without the use of a telescopic arm, maintaining high productivity, in the order of a few hundred cycles per minute.

In particular, one purpose of the present invention is to provide a robotic manipulation apparatus for manipulating objects that is light, compact, fast and precise.

Another purpose of the present invention is to provide a robotic manipulation apparatus for manipulating objects that is free of lubrication, and therefore suitable to be also placed in environments that require a high degree of hygiene and cleanliness.

Another purpose of the present invention is to provide a robotic manipulation apparatus for manipulating objects which has all the motors attached to its frame, in order to reduce the size of the moving masses and therefore the overall inertia of the apparatus as much as possible, also preventing the respective electric power supply cables from being subjected to movements during the operation of the apparatus itself.

Another purpose of the present invention is to provide a robotic manipulation apparatus for manipulating objects which has a high resistance to bending and torsion.

Another purpose of the present invention is to provide a robotic manipulation apparatus for manipulating objects that is easy to produce and has low production costs.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes and to resolve the technical problem disclosed above in a new and original way, also achieving considerable advantages compared to the state of the prior art, a robotic manipulation apparatus according to the present invention for manipulating objects comprises a support structure on which at least four arms are mounted, respectively a first arm, a second arm, a third arm and a fourth arm which are terminally connected to a single manipulation member. Each of the four arms is able to be moved in rotation by a respective drive member and the manipulation member is configured to manipulate the objects on an underlying work plane by moving with at least two degrees of freedom parallel to the work plane.

A first arm and a second arm of the four arms are aligned, opposed to each other and configured to move on a first positioning plane and a second positioning plane, respectively, which coincide with each other. A third arm and a fourth arm of the four arms are misaligned with each other, disposed symmetrically with respect to the first positioning plane and configured to move on a third positioning plane and a fourth positioning plane, respectively. The third and fourth positioning plane are intersecting with the first positioning plane along a central axis of the apparatus, so as to translate the manipulation member parallel to the central axis, thus defining a third degree of freedom.

In accordance with one aspect of the present invention, the apparatus comprises one or more coupling members configured to couple the third and fourth arm to the manipulation member and at least one connection element coaxial to an axis of rotation perpendicular to the first and second positioning plane, the connection element being rigidly attached to the coupling members so as to act as a fulcrum for the rotation of the manipulation member around the axis of rotation, giving the latter a fourth degree of freedom.

In accordance with another aspect of the present invention, the one or more coupling members are each connected to a respective terminal part of the third and fourth arm.

In accordance with another aspect of the present invention, the rotation around the axis of rotation of the manipulation member is comprised between 0° and 100°, in particular between 0° and 90°.

In accordance with another aspect of the present invention, the apparatus also comprises one or more rotation members attached to the manipulation member and comprising, or consisting of, ball bearings or bushings, capable of defining a rotoidal torque with the connection element.

In accordance with another aspect of the present invention, a corresponding angle of misalignment of about 120° is formed between the third positioning plane and the first positioning plane, and between the fourth positioning plane and the first positioning plane.

In accordance with another aspect of the present invention, the drive members are mounted on the support structure.

In accordance with another aspect of the present invention, the arms each comprise a first part and a second part connected to each other by means of a first rotoidal joint.

In accordance with another aspect of the present invention, the first part, on the opposite side with respect to the second part, is associated with the respective drive member.

In accordance with another aspect of the present invention, the second part of the first and second arm, on the opposite side with respect to the respective first part, is connected to the manipulation member by means of a corresponding second rotoidal joint.

In accordance with another aspect of the present invention, the second part of the first and second arm is connected to the manipulation member so as to rotate around a respective second axis of rotation, parallel to each other.

In accordance with another aspect of the present invention, the second part of the third and fourth arm, on the opposite side with respect to the respective first part, is connected to the respective coupling member by means of a corresponding third rotoidal joint.

In accordance with another aspect of the present invention, the second part of the third and fourth arm, on the opposite side with respect to the respective first part, is connected to the respective coupling member by means of a corresponding ball joint.

In accordance with another aspect of the present invention, the second part of the third and fourth arm is connected to the respective coupling member so as to rotate around a third axis of rotation and a fourth axis of rotation, respectively, the third and fourth axis of rotation being not parallel to each other.

In accordance with another aspect of the present invention, each second part has the shape of a parallelogram and comprises two longitudinal elements parallel to each other.

In accordance with another aspect of the present invention, the arms are conformed so as to have the same length.

In accordance with another aspect of the present invention, the connection element comprises a cylindrical element mounted rotating with respect to the manipulation member, the coupling members being attached to the free ends of the cylindrical element.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic three-dimensional view of a robotic manipulation apparatus for manipulating objects, according to the present invention;
- fig. 2 is an enlarged three-dimensional view of a detail of fig. 1;
- fig. 3 is an enlarged three-dimensional view of the detail of fig. 2, made according to another embodiment;
- fig. 4 is a bottom plan view of the robotic manipulation apparatus of fig. 1;
- fig. 5 is a schematic lateral view of the robotic manipulation apparatus of fig. 1 in a first operating condition;
- fig. 6 is a schematic lateral view of the robotic manipulation apparatus of fig. 1 in a second operating condition.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

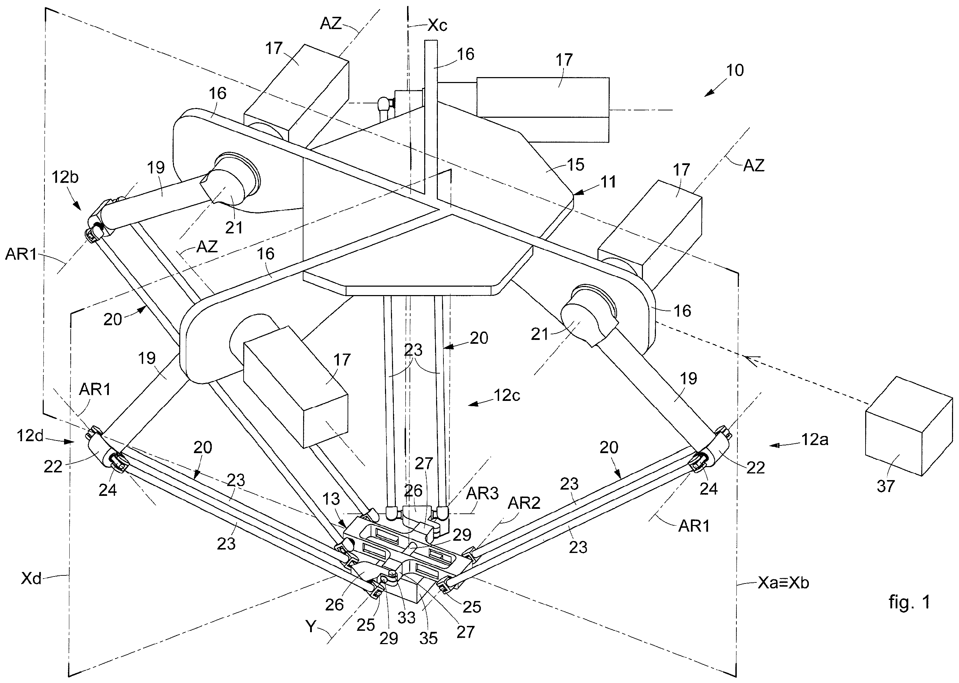

With reference to fig. 1, a robotic manipulation apparatus 10 according to the present invention, apparatus 10 hereafter, is suitable and usable to manipulate objects of substantially small sizes, as indicated above.

By way of example, the apparatus 10 can be disposed along a processing line, not shown in the drawings, comprising one or more stations for working the aforementioned objects.

The apparatus 10 comprises a support structure 11 on which at least four arms 12a-12d are mounted, which are terminally connected to a single manipulation, or gripping, member 13 which is mobile with at least two degrees of freedom parallel to a work plane PL. Specifically, there are a first arm 12a, a second arm 12b, a third arm 12c and a fourth arm 12d.

As will be described in more detail below, the apparatus 10 comprises a central axis C, typically disposed vertically, passing through a corresponding point of the support structure 11.

The support structure 11 is provided with a central support plate 15 and at least four uprights 16 disposed substantially radially, on which the respective arms 12a-12d are mounted.

Each of the four arms 12a-12d is able to be moved in rotation by a respective drive member 17.

Specifically, a respective drive member 17, for example an electric motor, is attached on each upright 16 to selectively drive the respective arm 12a-12d in an independent and coordinated manner.

The first and second arm 12a and 12b are disposed according to a disposition that is substantially symmetrical with respect to the central axis C and they are aligned with each other, opposed and configured to move along a first positioning plane Xa and a second positioning plane Xb, respectively. The second positioning plane Xb is aligned and coincides with the first positioning plane Xa, as shown in fig. 1, constituting in fact an extension thereof. Therefore, for simplicity of description, the first positioning plane Xa will be taken as a reference.

In other embodiments, not shown, the first and second arm 12a, 12b are disposed on opposite sides with respect to the central axis C, but they are not symmetrical. In this case, the first positioning plane Xa and the second positioning plane Xb will not be aligned, but disposed so as to define a certain angle between them.

The third and fourth arm 12c and 12d are disposed on opposite sides with respect to the first positioning plane Xa, according to a configuration whereby the latter is a plane of symmetry for the third and fourth arm 12c and 12d; the latter, in fact, are advantageously misaligned with each other, so as to allow the translation of the manipulation member 13 perpendicularly to the work plane PL, as will be described in detail below. In particular, the third and fourth arm 12c and 12d are configured to move along a third positioning plane Xc and a fourth positioning plane Xd, respectively, which intersect the first positioning plane Xa. Therefore, the manipulation member 13, by translating along, or parallel to, the central axis C has a third degree of freedom of movement.

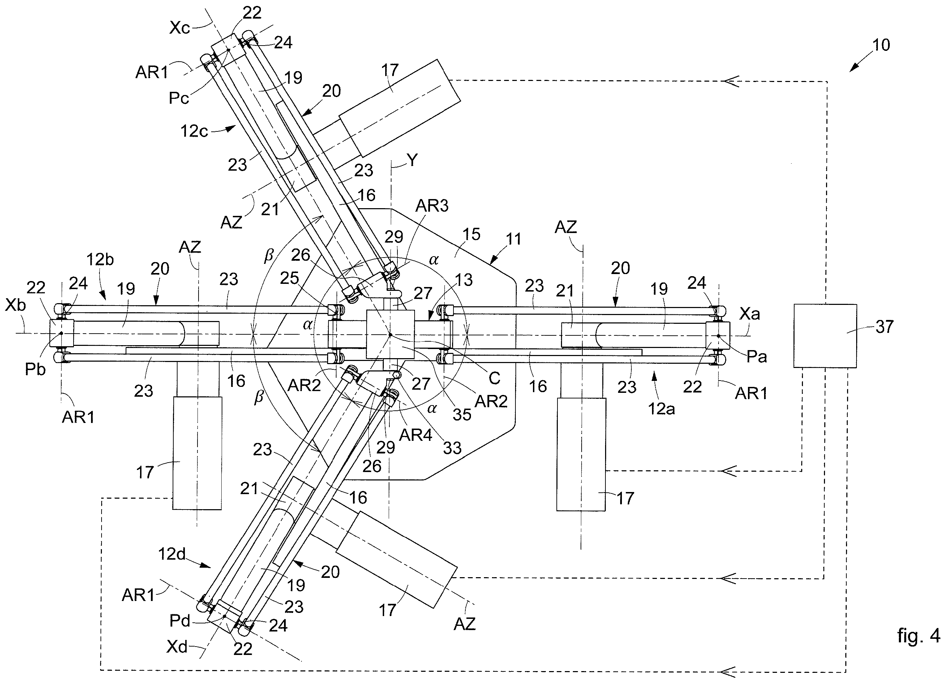

As can be seen in fig. 4, between the third positioning plane Xc and the first positioning plane Xa, and between the fourth positioning plane Xd and the first positioning plane Xa, a corresponding angle of misalignment α equal to about 120° is formed. Consequently, the third and fourth positioning plane Xc and Xd are oriented so as to be inclined angularly with respect to the second positioning plane Xb by a positioning angle β, internal and additional with respect to the angle of misalignment α, of about 60°.

In this way, the apparatus 10 has a perfectly balanced structure, which allows both to manipulate the objects with high precision, and also to have an excellent resistance to bending and torsion. In particular, the apparatus 10 is able to manipulate and move objects having a weight of a few kilograms.

Each arm 12a-12d comprises a first part, or pendular part, 19 and a second part, or parallelogram-shaped part, 20, connected to each other by means of a corresponding first rotoidal joint, or torque. In particular, the first rotoidal joint allows the relative rotation between the first part 19 and the second part 20 around a common first axis of rotation AR1. It should be noted that by the term rotoidal joint, or torque, we mean a connection that allows the rotation, around a common axis, between two reciprocally coupled bodies or elements.

As can be seen in figs. 1 and 4, the arms 12a-12d are conformed in such a way as to have the same length. It should also be noted that based on the geometry and sizes of the arms 12a-12d it is possible to define the work space of the manipulation member 13, understood as the volume within which the latter can be moved.

The pendular part 19 comprises a first end 21 associated in a known manner with the corresponding drive member 17 in order to rotate around a respective driving axis AZ, and a second end 22 connected to the second part 20.

The second part 20 has the shape of a parallelogram and comprises two longitudinal elements 23 parallel to each other. The longitudinal elements 23 are connected, preferably by means of rotoidal joints, to two transverse elements 24, 25, also parallel to each other. In particular, a first transverse element 24 is rotatably coupled to the second end 22, thus defining the first rotoidal joint that allows the relative rotation between the first and second part 19, 20 around the first common axis of rotation AR1, and a second transverse element 25 is operatively associated with the manipulation member 13.

Specifically, in the case of the first and second arm 12a and 12b, the second transverse element 25 is rotatably coupled directly to the manipulation member 13, thus defining a corresponding second rotoidal joint that allows the relative rotation between the second part 20 and the manipulation member 13 around a respective second axis of rotation AR2.

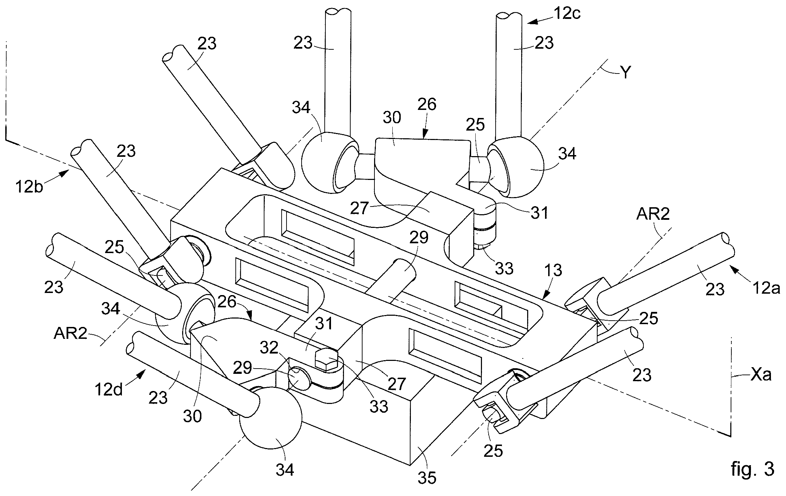

According to another embodiment, the rotatable coupling between the longitudinal elements 23 and the second transverse element 25 can be achieved by means of ball joints 34, in particular in correspondence with the third and fourth arm 12c and 12d (fig. 3).

According to another embodiment not shown in the drawings, the rotatable coupling between the longitudinal elements 23 and the second transverse element 25 of all four arms 12a-12d can be achieved by means of ball joints 34.

Moreover, in accordance with other embodiments of the present invention, the first and second rotoidal joints can also be replaced with corresponding ball joints.

In accordance with one aspect of the present invention, the apparatus 10 (figs. 1 and from 4 to 6) also comprises coupling means configured to couple the third and fourth arm 12c and 12d to the manipulation member 13, giving the latter a fourth degree of freedom, whereby the manipulation member 13 is able to rotate around an axis of rotation Y. As can be seen in fig. 4, the axis of rotation Y is perpendicular to the first positioning plane Xa.

In the example given here, the work plane PL is substantially horizontal, and the axis of rotation Y is also disposed substantially horizontally, therefore the axis of rotation Y and the work plane PL are parallel.

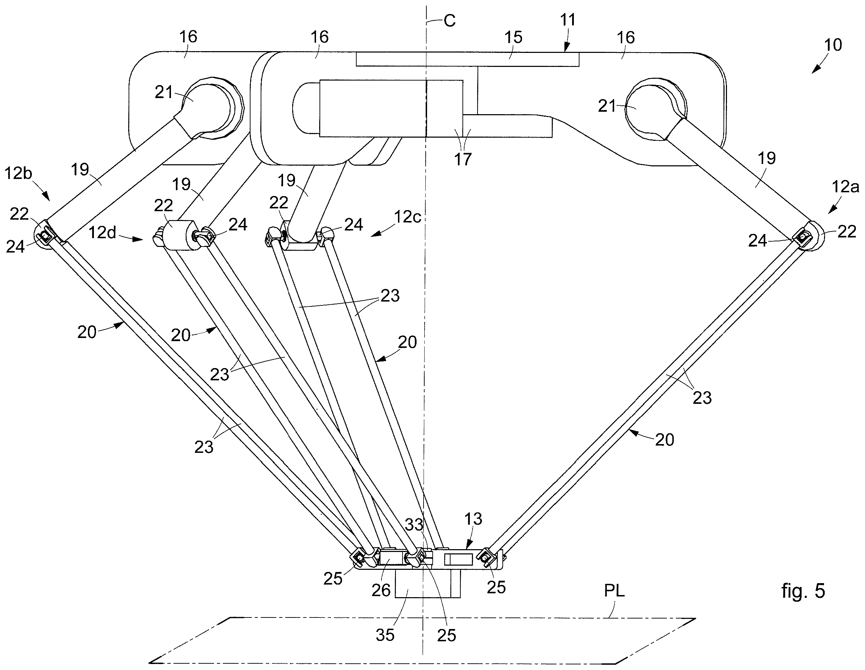

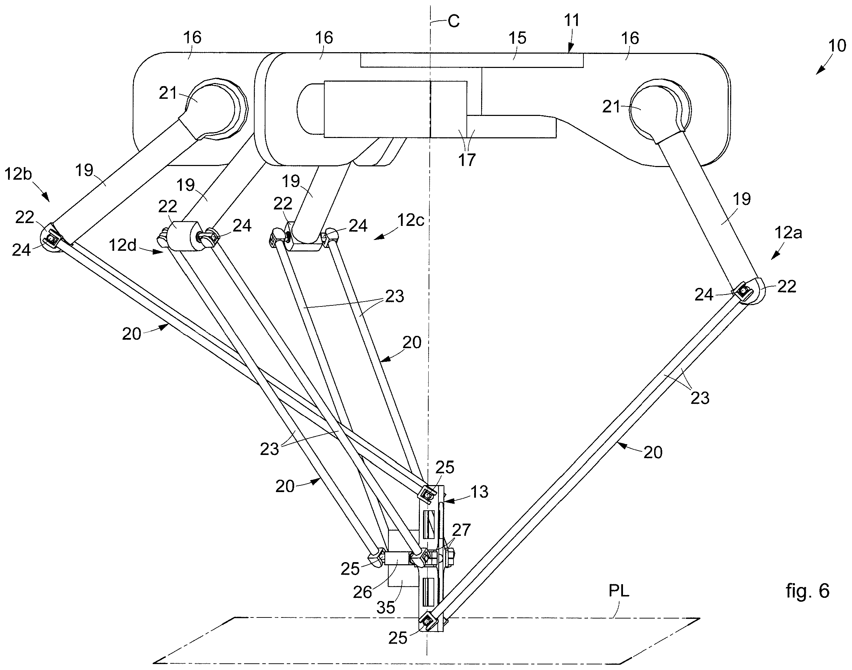

In the example shown, the coupling means comprise one or more coupling members 26 each connected to a respective terminal part of each arm 12c and 12d. Furthermore, the coupling means comprise at least one connection element 29 coaxial to an axis of rotation Y perpendicular to the first and second positioning plane Xa, Xb, the connection element 29 being rigidly attached to the coupling members 26 so as to act as a fulcrum for the rotation of the manipulation member 13 around the axis of rotation Y, giving the latter a fourth degree of freedom (figs. 5 and 6).

In particular, the manipulation member 13 rotates around the axis of rotation Y by an angle comprised between about 0° and 100°, preferably between 0° and 90°. Thanks to this configuration, the manipulation member 13 is able to rotate around the axis of rotation Y between at least a first operating position, in which it is parallel to the work plane PL (fig. 5), and at least a second operating position, in which it is substantially perpendicular to the work plane PL (fig. 6). We must clarify that the manipulation member 13 can of course assume all the intermediate positions, not shown, between the first and the second operating position.

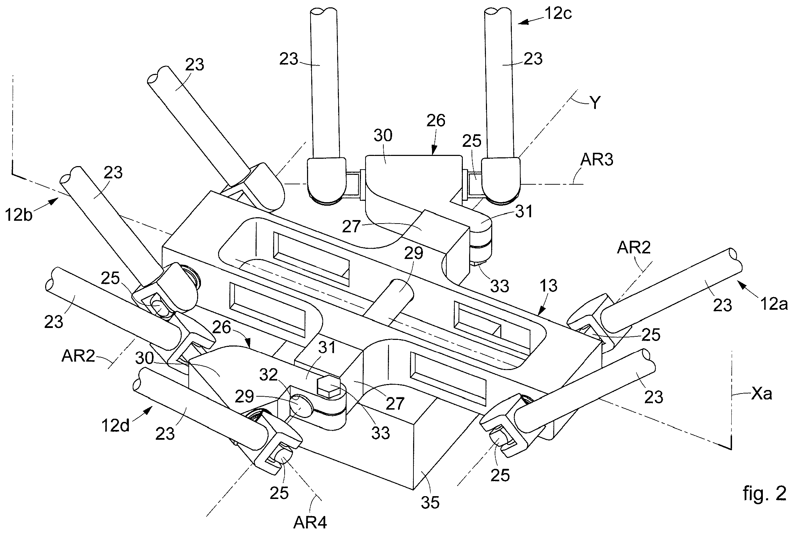

Each coupling member 26 (figs. 2 and 3) is shaped in such a way as to have both a first portion 30 configured to rotatably couple to the second transverse element 25 of the respective third or fourth arm 12c or 12d, thus defining a corresponding third rotoidal joint, and also a second portion 31 configured to integrally couple to a corresponding end of the connection element 29.

In the specific example of fig. 2, the third rotoidal joint allows the relative rotation between the second part 20 of the third and fourth arm 12c, 12d and the manipulation member 13 around a third common axis of rotation AR3 and a fourth common axis of rotation AR4, respectively, which are perpendicular to the third positioning plane Xc and to the fourth positioning plane Xd, respectively (fig. 4).

The second portion 31 (fig. 2) is provided with a housing seating 32 (figs. 2 and 3) configured to house a corresponding end of the connection element 29, whereby when the latter is inserted into the respective housing seating 32, it is possible to clamp the connection element 29 by acting, for example, on a clamping element 33 of any known type whatsoever, for example a plug or a ring nut.

In the embodiment shown by way of a non-limiting example, the coupling means also preferably comprise one or more rotation members 27 attached to the manipulation member 13. The rotation members 27 comprise, or consist of, ball bearings or bushings, capable of defining a fourth rotoidal joint, or torque, with the connection element 29 and internally provided with a cavity coaxial to the axis of rotation Y, not shown in the drawings, wherein the connection element 29 is free to rotate in order to allow the controlled rotation of the manipulation member 13 around the axis of rotation Y.

In the attached drawings, the manipulation member 13 is represented schematically; however, it can comprise any known gripping device 35, or one to be created in the future, chosen in relation to the type of object to be manipulated, for example it can comprise a mechanical gripper, a magnetic magnet, or a sucker etc. We wish to clarify that the gripping device 35 is shown schematically and in a simplified manner as a rectangular parallelepiped associated with the manipulation member 13.

The apparatus 10 is also provided with a central control unit 37 (figs. 1 and 4) programmed to control the drive members 17 in order to coordinate the movements of the first, second, third and fourth arm 12a-12d for the correct rotation of the manipulation member 13.

The coordinated movement of the arms 12a-12d determines the correct rotation of the manipulation member 13 around the axis of rotation Y; in fact, the first arm 12a and the second arm 12b have the function of precisely adjusting the inclination of the manipulation member 13, by cooperating with the third and fourth arm 12c and 12d. (fig. 4).

It is clear that modifications and/or additions of parts may be made to the apparatus 10 as described heretofore, without departing from the field and scope of the present invention, as defined by the claims.

It is also clear that, although the present invention has been described with reference to some specific examples, a person of skill in the art will be able to achieve other equivalent forms of robotic manipulation apparatuses for manipulating objects, having the characteristics as set forth in the claims and hence all coming within the field of protection defined thereby.

In the following claims, the sole purpose of the references in brackets is to facilitate their reading and they must not be considered as restrictive factors with regard to the field of protection defined by the same claims.

## Claims

1. Robotic manipulation apparatus (10) for objects, which comprises a support structure (11) on which four arms (12a, 12b, 12c, 12d) are mounted, which are terminally connected to a single manipulation member (13), each of said four arms (12a, 12b, 12c, 12d) being able to be moved in rotation by a respective drive member (17), said manipulation member (13) being configured to manipulate said objects on an underlying work plane (PL) by moving with at least two degrees of freedom parallel to said work plane (PL), wherein a first arm (12a) and a second arm (12b) of said four arms (12a, 12b, 12c, 12d) are aligned, opposed to each other and configured to move on a first positioning plane (Xa) and a second positioning plane (Xb), respectively, which coincide with each other, and wherein a third arm (12c) and a fourth arm (12d) of said four arms (12a, 12b, 12c, 12d) are misaligned with each other, disposed symmetrically with respect to said first positioning plane (Xa) and configured to move on a third positioning plane (Xc) and a fourth positioning plane (Xd), respectively, said third and fourth positioning plane (Xc, Xd) being intersecting with said first positioning plane (Xa) along a central axis (C) of said apparatus (10), so as to translate said manipulation member (13) parallel to said central axis (C), thus defining a third degree of freedom, said apparatus (10) being **characterized in that** it comprises one or more coupling members (26) configured to couple said third and fourth arm (12c, 12d) to said manipulation member (13) and at least one connection element (29) coaxial to an axis of rotation (Y) perpendicular to said first and second positioning plane (Xa, Xb), said connection element (29) being rigidly attached to said coupling members (26) so as to act as a fulcrum for the rotation of said manipulation member (13) around said axis of rotation (Y), giving the latter a fourth degree of freedom.

2. Apparatus (10) as in claim 1, **characterized in that** said one or more coupling members (26) are each connected to a respective terminal part of said third and fourth arm (12c, 12d).

3. Apparatus (10) as in claim 1 or 2, **characterized in that** said rotation of said manipulation member (13) around said axis of rotation (Y) is comprised between 0° and 100°, in particular between 0° and 90°.

4. Apparatus (10) as in claim 1, 2 or 3, **characterized in that** it also comprises one or more rotation members (27) attached to said manipulation member (13) and comprising, or consisting of, ball bearings or bushings, capable of defining a rotoidal torque with said connection element (29).

5. Apparatus (10) as in any claim hereinbefore, **characterized in that** a corresponding angle of misalignment (α) of about 120° is formed between said third positioning plane (Xc) and said first positioning plane (Xa), and between said fourth positioning plane (Xd) and said first positioning plane (Xa).

6. Apparatus (10) as in any claim hereinbefore, **characterized in that** said drive members (17) are mounted on said support structure (11).

7. Apparatus (10) as in any claim hereinbefore, **characterized in that** said arms (12a, 12b, 12c, 12d) each comprise a first part (19) and a second part (20) connected to each other by means of a first rotoidal joint.

8. Apparatus (10) as in claim 7, **characterized in that** said first part (19), on the opposite side with respect to said second part (20), is associated with said respective drive member (17).

9. Apparatus (10) as in claim 7 or 8, **characterized in that** said second part (20) of said first and second arm (12a, 12b), on the opposite side with respect to the respective first part (19), is connected to said manipulation member (13) by means of a corresponding second rotoidal joint.

10. Apparatus (10) as in claim 9, **characterized in that** said second part (20) of said first and second arm (12a, 12b) is connected to said manipulation member (13) so as to rotate around a respective second axis of rotation (AR2), parallel to each other.

11. Apparatus (10) as in any claim from 7 to 10, **characterized in that** said second part (20) of said third and fourth arm (12c, 12d), on the opposite side with respect to the respective first part (19), is connected to the respective coupling member (26) by means of a corresponding third rotoidal joint or by means of a corresponding ball joint (34).

12. Apparatus (10) as in claim 11, **characterized in that** said second part (20) of said third and fourth arm (12c, 12d) is connected to the respective coupling member (26) so as to rotate around a third axis of rotation (AR3) and a fourth axis of rotation (AR4), respectively, said third and fourth axis of rotation (AR3, AR4) being not parallel to each other.

13. Apparatus (10) as in any claim from 7 to 12, **characterized in that** each second part (20) has the shape of a parallelogram and comprises two longitudinal elements (23) parallel to each other.

14. Apparatus (10) as in any claim hereinbefore, **characterized in that** said arms (12a, 12b, 12c, 12d) are conformed so as to have the same length.

15. Apparatus (10) as in any claim hereinbefore, **characterized in that** said connection element (29) comprises a cylindrical element mounted rotating with respect to said manipulation member (13), said coupling members (26) being attached to the free ends of said cylindrical element.

## Patentansprüche

1. Roboter-Handhabungsvorrichtung (10) für Objekte, die eine Trägerstruktur (11) umfasst, auf der vier Arme (12a, 12b, 12c, 12d) montiert sind, die endständig mit einem einzelnen Handhabungselement (13) verbunden sind, wobei jeder der vier Arme (12a, 12b, 12c, 12d) durch ein jeweiliges Antriebselement (17) in Drehung versetzt werden kann, wobei das Handhabungselement (13) konfiguriert ist, um die Objekte auf einer darunterliegenden Arbeitsebene (PL) zu handhaben, indem es sich mit mindestens zwei Freiheitsgraden parallel zu der Arbeitsebene (PL) bewegt, wobei ein erster Arm (12a) und ein zweiter Arm (12b) der vier Arme (12a, 12b, 12c, 12d) ausgerichtet sind, einander gegenüberliegen und konfiguriert sind, um sich auf einer ersten Positionierungsebene (Xa) bzw. einer zweiten Positionierungsebene (Xb) zu bewegen, die miteinander übereinstimmen, und wobei ein dritter Arm (12c) und ein vierter Arm (12d) der vier Arme (12a, 12b, 12c, 12d) zueinander fehlausgerichtet sind, symmetrisch in Bezug auf die erste Positionierungsebene (Xa) angeordnet sind und konfiguriert sind, um sich auf einer dritten Positionierungsebene (Xc) bzw. einer vierten Positionierungsebene (Xd) zu bewegen, wobei die dritte und vierte Positionierungsebene (Xc, Xd) die erste Positionierungsebene (Xa) entlang einer Mittelachse (C) der Vorrichtung (10) schneiden, um das Handhabungselement (13) parallel zu der Mittelachse (C) zu verschieben, wodurch ein dritter Freiheitsgrad definiert wird, wobei die Vorrichtung (10) **dadurch gekennzeichnet ist, dass** sie ein oder mehrere Kopplungselemente (26), die konfiguriert sind, um den dritten und vierten Arm (12c, 12d) mit dem Handhabungselement (13) zu koppeln, und mindestens ein Verbindungselement (29) koaxial zu einer Drehachse (Y) senkrecht zu der ersten und zweiten Positionierungsebene (Xa, Xb) umfasst, wobei das Verbindungselement (29) starr an den Kopplungselementen (26) angebracht ist, um als Drehpunkt für die Drehung des Handhabungselements (13) um die Drehachse (Y) zu wirken, wodurch Letzterem ein vierter Freiheitsgrad verliehen wird.

2. Vorrichtung (10) nach Anspruch 1, **dadurch gekennzeichnet, dass** das eine oder die mehreren Kopplungselemente (26) jeweils mit einem jeweiligen endständigen Teil des dritten und vierten Arms (12c, 12d) verbunden sind.

3. Vorrichtung (10) nach Anspruch 1 oder 2, **dadurch gekennzeichnet, dass** die Drehung des Handhabungselements (13) um die Drehachse (Y) zwischen 0° und 100°, insbesondere zwischen 0° und 90° liegt.

4. Vorrichtung (10) nach Anspruch 1, 2 oder 3, **dadurch gekennzeichnet, dass** sie auch ein oder mehrere Drehelemente (27) umfasst, die an dem Handhabungselement (13) angebracht sind und Kugellager oder Buchsen umfassen oder daraus bestehen, die in der Lage sind, ein Drehmoment mit dem Verbindungselement (29) zu definieren.

5. Vorrichtung (10) nach einem der vorhergehenden Ansprüche, **dadurch gekennzeichnet, dass** ein entsprechender Fehlausrichtungswinkel (α) von etwa 120° zwischen der dritten Positionierungsebene (Xc) und der ersten Positionierungsebene (Xa) und zwischen der vierten Positionierungsebene (Xd) und der ersten Positionierungsebene (Xa) gebildet ist.

6. Vorrichtung (10) nach einem der vorhergehenden Ansprüche, **dadurch gekennzeichnet, dass** die Antriebselemente (17) auf der Trägerstruktur (11) montiert sind.

7. Vorrichtung (10) nach einem der vorhergehenden Ansprüche, **dadurch gekennzeichnet, dass** die Arme (12a, 12b, 12c, 12d) jeweils einen ersten Teil (19) und einen zweiten Teil (20) umfassen, die mittels eines ersten Drehgelenks miteinander verbunden sind.

8. Vorrichtung (10) nach Anspruch 7, **dadurch gekennzeichnet, dass** der erste Teil (19) auf der gegenüberliegenden Seite in Bezug auf den zweiten Teil (20) dem jeweiligen Antriebselement (17) zugeordnet ist.

9. Vorrichtung (10) nach Anspruch 7 oder 8, **dadurch gekennzeichnet, dass** der zweite Teil (20) des ersten und zweiten Arms (12a, 12b) auf der gegenüberliegenden Seite in Bezug auf den jeweiligen ersten Teil (19) mittels eines entsprechenden zweiten Drehgelenks mit dem Handhabungselement (13) verbunden ist.

10. Vorrichtung (10) nach Anspruch 9, **dadurch gekennzeichnet, dass** der zweite Teil (20) des ersten und zweiten Arms (12a, 12b) mit dem Handhabungselement (13) verbunden ist, um sich um eine jeweilige zweite Drehachse (AR2) parallel zueinander zu drehen.

11. Vorrichtung (10) nach einem der Ansprüche 7 bis 10, **dadurch gekennzeichnet, dass** der zweite Teil (20) des dritten und vierten Arms (12c, 12d) auf der gegenüberliegenden Seite in Bezug auf den jeweiligen ersten Teil (19) mittels eines entsprechenden dritten Drehgelenks oder mittels eines entsprechenden Kugelgelenks (34) mit dem jeweiligen Kopplungselement (26) verbunden ist.

12. Vorrichtung (10) nach Anspruch 11, **dadurch gekennzeichnet, dass** der zweite Teil (20) des dritten und vierten Arms (12c, 12d) mit dem jeweiligen Kopplungselement (26) verbunden ist, um sich um eine dritte Drehachse (AR3) bzw. eine vierte Drehachse (AR4) zu drehen, wobei die dritte und vierte Drehachse (AR3, AR4) nicht parallel zueinander sind.

13. Vorrichtung (10) nach einem der Ansprüche 7 bis 12, **dadurch gekennzeichnet, dass** jeder zweite Teil (20) die Form eines Parallelogramms aufweist und zwei Längselemente (23) parallel zueinander umfasst.

14. Vorrichtung (10) nach einem der vorhergehenden Ansprüche, **dadurch gekennzeichnet, dass** die Arme (12a, 12b, 12c, 12d) so geformt sind, dass sie die gleiche Länge aufweisen.

15. Vorrichtung (10) nach einem der vorhergehenden Ansprüche, **dadurch gekennzeichnet, dass** das Verbindungselement (29) ein zylindrisches Element umfasst, das in Bezug auf das Handhabungselement (13) drehbar montiert ist, wobei die Kopplungselemente (26) an den freien Enden des zylindrischen Elements angebracht sind.

## Revendications

1. Appareil de manipulation robotique (10) pour objets, qui comprend une structure de support (11) sur laquelle sont montés quatre bras (12a, 12b, 12c, 12d), qui sont reliés à leur extrémité à un seul élément de manipulation (13), chacun desdits quatre bras (12a, 12b, 12c, 12d) pouvant être déplacés en rotation par un élément d'entraînement respectif (17), ledit élément de manipulation (13) étant configuré pour manipuler lesdits objets sur un plan de travail sous-jacent (PL) en se déplaçant avec au moins deux degrés de liberté parallèlement audit plan de travail (PL), dans lequel un premier bras (12a) et un deuxième bras (12b) parmi lesdits quatre bras (12a, 12b, 12c, 12d) sont alignés, opposés l'un à l'autre et configurés pour se déplacer respectivement sur un premier plan de positionnement (Xa) et un deuxième plan de positionnement (Xb), qui coïncident l'un avec l'autre, et dans lequel un troisième bras (12c) et un quatrième bras (12d) desdits quatre bras (12a, 12b, 12c, 12d) sont désalignés l'un par rapport à l'autre, disposés symétriquement par rapport audit premier plan de positionnement (Xa) et configurés pour se déplacer respectivement sur un troisième plan de positionnement (Xc) et un quatrième plan de positionnement (Xd), lesdits troisième et quatrième plans de positionnement (Xc, Xd) coupant ledit premier plan de positionnement (Xa) le long d'un axe central (C) dudit appareil (10), de manière à translater ledit élément de manipulation (13) parallèlement audit axe central (C), définissant ainsi un troisième degré de liberté, ledit appareil (10) étant **caractérisé en ce qu'**il comprend un ou plusieurs éléments de couplage (26) configurés pour coupler lesdits troisième et quatrième bras (12c, 12d) audit élément de manipulation (13) et au moins un élément de liaison (29) coaxial à un axe de rotation (Y) perpendiculaire auxdits premier et deuxième plans de positionnement (Xa, Xb), ledit élément de liaison (29) étant fixé rigidement auxdits éléments de couplage (26) de manière à servir de pivot pour la rotation dudit élément de manipulation (13) autour dudit axe de rotation (Y), conférant à ce dernier un quatrième degré de liberté.

2. Appareil (10) selon la revendication 1, **caractérisé en ce que** ledit ou lesdits éléments de couplage (26) sont chacun reliés à une partie terminale respective desdits troisième et quatrième bras (12c, 12d).

3. Appareil (10) selon la revendication 1 ou 2, **caractérisé en ce que** ladite rotation dudit élément de manipulation (13) autour dudit axe de rotation (Y) est comprise entre 0° et 100°, en particulier entre 0° et 90°.

4. Appareil (10) selon la revendication 1, 2 ou 3, **caractérisé en ce qu'**il comprend également un ou plusieurs éléments de rotation (27) fixés audit élément de manipulation (13) et
comprenant, ou constitué de, roulements à billes ou de bagues, capables de définir un couple rotoïdal avec ledit élément de connexion (29).

5. Appareil (10) selon l'une quelconque des revendications précédentes, **caractérisé en ce qu'**un angle de désalignement correspondant (α) d'environ 120° est formé entre ledit troisième plan de positionnement (Xc) et ledit premier plan de positionnement (Xa), et entre ledit quatrième plan de positionnement (Xd) et ledit premier plan de positionnement (Xa).

6. Appareil (10) selon l'une quelconque des revendications précédentes, **caractérisé en ce que** lesdits éléments d'entraînement (17) sont montés sur ladite structure de support (11).

7. Appareil (10) selon l'une quelconque des revendications précédentes, **caractérisé en ce que** lesdits bras (12a, 12b, 12c, 12d) comprennent chacun une première partie (19) et une deuxième partie (20) reliées l'une à l'autre au moyen d'une première articulation rotoïdale.

8. Appareil (10) selon la revendication 7, **caractérisé en ce que** ladite première partie (19), du côté opposé à ladite deuxième partie (20), est associée audit élément d'entraînement respectif (17).

9. Appareil (10) selon la revendication 7 ou 8, **caractérisé en ce que** ladite deuxième partie (20) desdits premier et deuxième bras (12a, 12b), du côté opposé à la première partie respective (19), est reliée audit élément de manipulation (13) au moyen d'une deuxième articulation rotoïdale correspondante.

10. Appareil (10) selon la revendication 9, **caractérisé en ce que** ladite deuxième partie (20) desdits premier et deuxième bras (12a, 12b) est reliée audit élément de manipulation (13) de manière à tourner autour d'un deuxième axe de rotation respectif (AR2), parallèles l'un à l'autre.

11. Appareil (10) selon l'une quelconque des revendications 7 à 10, **caractérisé en ce que** ladite deuxième partie (20) desdits troisième et quatrième bras (12c, 12d), du côté opposé par rapport à la première partie respective (19), est reliée à l'élément de couplage respectif (26) au moyen d'une troisième articulation rotoïdale correspondante ou au moyen d'une articulation à rotule correspondante (34).

12. Appareil (10) selon la revendication 11, **caractérisé en ce que** ladite deuxième partie (20) desdits troisième et quatrième bras (12c, 12d) est reliée à l'élément de couplage respectif (26) de manière à tourner respectivement autour d'un troisième axe de rotation (AR3) et d'un quatrième axe de rotation (AR4), lesdits troisième et quatrième axes de rotation (AR3, AR4) n'étant pas parallèles l'un à l'autre.

13. Appareil (10) selon l'une quelconque des revendications 7 à 12, **caractérisé en ce que** chaque deuxième partie (20) a la forme d'un parallélogramme et comprend deux éléments longitudinaux (23) parallèles l'un à l'autre.

14. Appareil (10) selon l'une quelconque des revendications précédentes, **caractérisé en ce que** lesdits bras (12a, 12b, 12c, 12d) sont conformés de manière à avoir la même longueur.

15. Appareil (10) selon l'une quelconque des revendications précédentes, **caractérisé en ce que** ledit élément de liaison (29) comprend un élément cylindrique monté de manière à pouvoir tourner par rapport audit élément de manipulation (13), lesdits éléments de couplage (26) étant fixés aux extrémités libres dudit élément cylindrique.
